# DEMANDE DE BREVET EUROPEEN

(11) **EP 1 886 804 A1**
(43) Date de publication de la demande: **13.02.2008**
(21) Numéro de dépôt: 06118292.9
(22) Date de dépôt: 02.08.2006
(51) Int. Cl.: B32B 17/10, F21K 7/00, B32B 15/18, B32B 15/20

(54) **Eclairage au moyen de LEDs**

(71) Demandeur: AGC Flat Glass Europe SA, 1170 Bruxelles (BE)
(72) Inventeur: La désignation de l'inventeur n'a pas encore été déposée
(74) Mandataire: Decamps, Alain René François

(57) **Abrégé**

La présente invention concerne des moyens d'éclairage comprenant des diodes électroluminescentes.

Les moyens d'éclairage selon l'invention comprennent un ensemble de diodes électroluminescentes disposées derrière une feuille transparente notamment en matériau verrier, un circuit d'alimentation des diodes et une feuille de matériau bon conducteur de la chaleur s'étendant en regard des diodes pour faciliter l'évacuation de la chaleur produite par le fonctionnement des diodes.

## Description

La présente invention concerne un dispositif d'éclairage comprenant un ensemble de diodes électroluminescentes (LED).

L'utilisation de LEDs comme moyen d'éclairage rencontre un intérêt croissant. L'avantage principal de ces moyens d'éclairage est lié à leur rendement lumineux élevé par comparaison avec celui des moyens traditionnels que constituent les lampes à incandescence ou les tubes dits "néon". Un autre avantage réside dans la durée de vie de ces moyens. Sauf surcharge destructrice, la durée de vie de ces diodes se compte en dizaines de millier d'heures de fonctionnement. De plus cette durée est celle correspondant à une diminution de moitié de la puissance lumineuse délivrée. La diode voit en effet sa puissance décroître mas son fonctionnement n'est pas interrompu.

La mise en oeuvre des LEDs dans des moyens d'éclairage est cependant soumise à différentes conditions. En premier, la puissance de chaque LED est notoirement insuffisante pour répondre à une utilisation comme moyen d'éclairage. Même les plus puissantes récemment développées ne dépassent pas 3 à 5 watts. Les diodes les plus répandues offrent une puissance de l'ordre de 1 watt. Pour constituer des moyens d'éclairage offrant des puissances habituellement utilisées il faut donc rassembler plusieurs diodes, voire plusieurs dizaines de diodes. La mise en oeuvre de ces ensembles nécessite l'utilisation de circuits d'alimentation appropriés. Il est aussi nécessaire de prévoir des structures faciles à réaliser dans des conditions industrielles économiques. Pour cela les techniques de production doivent se prêter à une automatisation poussée.

Techniquement le développement de ces moyens d'éclairage comporte aussi quelques contraintes. Le choix des diodes, en dehors des raisons indiquées précédemment, est aussi dicté par des raisons d'encombrement. Les petites dimensions des diodes permettent de les disposer dans des conditions qui ne permettent pas l'utilisation par exemple de lampes à incandescence. Elles offrent ainsi de nouvelles possibilités de mise en oeuvre.

Le confinement des diodes dans des espaces de dimensions restreintes connaît cependant des limites qui sont liées en particulier à la chaleur produite par leur fonctionnement.

Si à puissance électrique égale les LEDs présentent un rendement lumineux, très supérieur à celui des lampes à incandescence il reste qu'une part significative est encore dissipée sous forme de chaleur. Pour les LEDs de moyenne puissance, de l'ordre de 1watt, cette proportion d'énergie thermique n'est pas inférieure à 70%. Pour les diodes les plus puissantes cette proportion est ordinairement encore plus élevée et peut atteindre 80 et même 85%.

A l'énergie dissipée directement sous forme de chaleur par le fonctionnement de la diode s'ajoute éventuellement celle qui résulte d'une absorption d'une fraction de la lumière émise, par le matériau enveloppant la diode proprement dite. Cette fraction est ordinairement limitée par une construction optique qui permet de diriger le flux lumineux dans les meilleures conditions possibles.

Le dégagement de chaleur par la diode doit donc être bien maîtrisé. L'élévation de température est en effet nuisible au bon fonctionnement des diodes. Une température excessive peut conduire rapidement à la détérioration de la diode. Pour cette raison les diodes commercialisées sont assorties de températures limite d'utilisation. Les températures les plus élevées se situent à environ 100°C. Mais pour un fonctionnement durable des températures nettement moindre sont préférées. Ordinairement, il est recommandé de ne pas dépasser une température de l'ordre de 80°C pour un fonctionnement continu sur de longues périodes. Ces températures sont celles qui sont constatée au voisinage immédiat de la diode. Les températures de jonctions des conducteurs avec l'éléments semi-conducteur sont en fait plus élevées.

Indépendamment de la détérioration de la diode, il est établi que ses performances en terme de puissance lumineuse et de longévité sont aussi altérées par la température. Il est donc dans tous les cas souhaitable de maintenir les diodes dans un environnement permettant de maintenir la température aussi peu élevée que possible.

L'évacuation de la chaleur dégagée par la diode pour les produits les plus traditionnels s'effectue par les conducteurs d'alimentation qui sont normalement de bons conducteurs de la chaleur. Néanmoins l'environnement de la diode, et particulièrement son incorporation dans des matériaux formant son enveloppe, matériaux nécessairement non-conducteurs de l'électricité, et par suite mauvais conducteurs de la chaleur, fait que cette évacuation est souvent insuffisante.

Pour améliorer l'évacuation de la chaleur les fabricants de LEDs proposent des structures comportant ce qui est désigné sous le nom de "puits de chaleur" ("heat sink"). Dans ces structures la diode est associée ordinairement à un élément dont les dimensions sont celles de cet ensemble, élément qui présente une bonne conduction thermique. Il s'agit essentiellement d'un élément métallique de quelques fractions de cm² de surface. Ces dimensions sont supérieures à celles des conducteurs d'alimentation de la diode mais restent néanmoins limitées.

L'invention a pour but de fournir des moyens d'éclairage offrant une puissance lumineuse conséquente dans des dimensions limitées. Par suite les diodes qui entrent dans la constitution de ces moyens sont rassemblées de telle sorte qu'elles sont relativement proches les unes des autres. Cette configuration rend l'évacuation de la chaleur particulièrement nécessaire, et l'utilisation des diodes avec "puits de chaleur" ne suffit habituellement pas.

L'invention propose des moyens d'éclairage comprenant un ensemble de diodes électroluminescentes disposées derrière une feuille transparente, un circuit d'alimentation des diodes et une feuille d'un matériau bon conducteur de la chaleur s'étendant en regard des diodes.

Les moyens d'éclairage selon l'invention comportent une feuille transparente qui assure le passage du flux lumineux vers l'espace à éclairer. Le plus habituellement une feuille de verre minéral est utilisée à cet usage. La feuille peut néanmoins être constituée également de matériaux transparents organiques, par exemple de polycarbonates qualifiés aussi de "verres organiques".

Quelle que soit la nature de la feuille transparente, elle présente ordinairement une conduction thermique très faible et insuffisante pour permettre une bonne évacuation de la chaleur dégagée par les diodes. Son rôle est donc essentiellement de constituer une surface protégeant les diodes en les séparant de l'espace éclairé.

Le circuit d'alimentation des diodes est avantageusement constitué d'une couche conductrice portée par la feuille transparente. La nature de cette couche conductrice est par exemple d'oxyde conducteur telles que les couches bien connues d'ITO (indium tin oxide) les couches d'oxyde d'étain dopé au fluor ou à l'antimoine ou les couches métalliques incorporées dans des empilages comprenant aussi des couches diélectriques. Toutes ces couches bien connues présentent l'avantage sous faible épaisseur d'être essentiellement transparentes aux rayons de longueur d'onde du domaine visible. Ces couches sont régulièrement utilisées dans le domaine verrier et sont appliquées selon des techniques traditionnelles.

L'éclairage est dirigé du seul côté de l'ensemble portant la feuille transparente. Si le circuit d'alimentation est situé derrière les diodes par rapport à cette feuille transparente, il peut être opaque. Dans ce cas il peut être formé par un mince film métallique tels que ceux utilisés habituellement pour constituer les circuits électroniques.

Face aux diodes le matériau bon conducteur de la chaleur permet de répartir celle-ci sur la plus grande surface possible de manière à faciliter son évacuation dans le milieu environnant au contact duquel cette plaque est disposée. Le plus souvent cette plaque est au contact de l'air, mais elle peut aussi se trouver intégrée dans un élément de construction tel que paroi de bâtiment, plafond ou équivalent. Le plus souvent le matériau dont sont constitués ces éléments s est peu conducteur de la chaleur. Les dimensions les plus grandes possibles de la plaque conductrice sont d'autant plus nécessaires pour obtenir l'évacuation requise.

La feuille bonne conductrice de la chaleur est habituellement aussi conductrice de l'électricité. Il est donc nécessaire de ne pas disposer les diodes directement au contact de cette feuille. Une mince couche de matériau diélectrique suffit à assurer l'isolation. Il est préférable que cette couche soit mince pour maintenir la conduction thermique aussi élevée que possible. Le cas échéant l'isolation des diodes vis-à-vis de la feuille conductrice peut être assurée par une simple lame d'air, les diodes étant maintenues à faible distance de la feuille conductrice de la chaleur.

De manière préférée, la séparation des diodes du contact direct avec la feuille de matériau conducteur de la chaleur est obtenue par interposition d'un mince film diélectrique. Ce film diélectrique revêt éventuellement la feuille conductrice. Avantageusement ce film diélectrique est constitué dans un matériau utilisé pour assembler la feuille transparente à la feuille conductrice de la chaleur, dans une structure de type feuilleté.

L'invention est décrite de façon détaillée dans la suite en faisant référence aux planches de dessins dans lesquelles :
- la figure la présente en éclaté en perspective, les constituants d'un moyen d'éclairage selon l'invention;
- la figure 1b correspond au moyen d'éclairage de la figure 1a une fois les éléments constitutifs assemblés;
- la figure 2 est une coupe schématique partielle d'un moyen d'éclairage tel que représenté à la figure 1b;
- la figure 3 est une coupe analogue à celle de la figure 2, d'un ensemble d'éclairage selon l'invention présentant une autre structure;
- la figure 4 est une vue schématique en coupe d'un mode de réalisation de l'invention mettant en oeuvre des diodes comprenant un "puits de chaleur".

La figure la présente un ensemble destiné à constituer un moyen d'éclairage selon l'invention. Il comprend une feuille transparente 5, typiquement une feuille de verre. Sur cette feuille 5 une couche conductrice non référencée est découpée pour constituer un circuit électrique. La découpe en éliminant la couche selon les tracés souhaités, représentés sur la figure par les traits pointillés 4, constitue des pistes conductrices qui alimentent des séries de diodes 3.

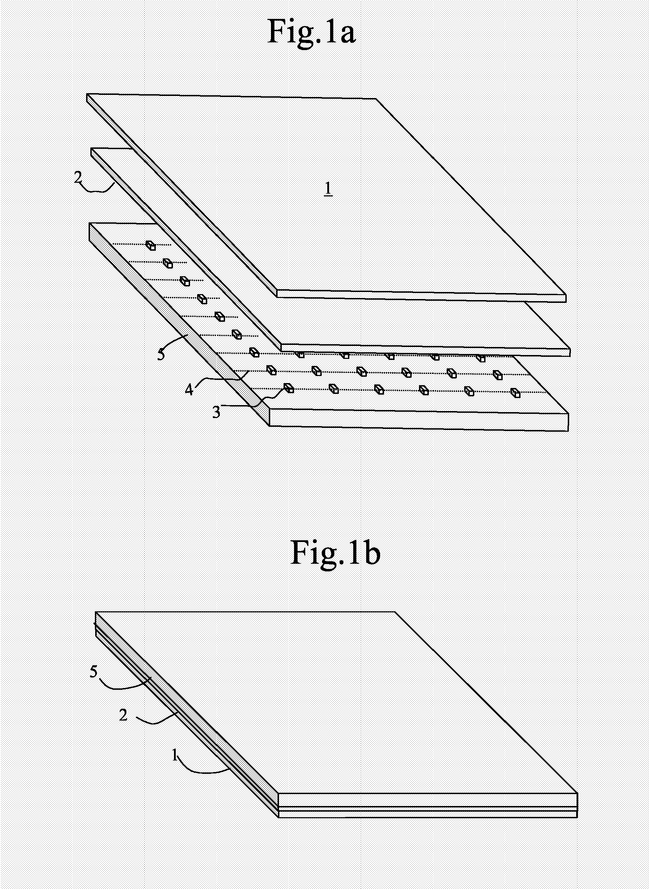

Une plaque ou feuille bonne conductrice de la chaleur 1 est disposée sur la totalité de la surface de la feuille transparente 5 pour constituer avec une feuille intercalaire 2 un ensemble feuilleté comme représenté à la figure 1b. Cette feuille 1 est avantageusement métallique. Des feuilles de cuivre ou d'aluminium sont particulièrement préférées en raison de leur bonne conductivité thermique. Néanmoins en pratique une feuille d'acier convient bien pour des raisons économiques.

Dans la configuration représentée la couche conductrice appliquée sur la feuille de verre 5 est essentiellement transparente de telle sorte qu'elle ne fait pas obstacle au flux lumineux.

L'assemblage de la feuille de verre et de la feuille de matériau conducteur, est réalisé de manière avantageuse au moyen d'une feuille de matériau thermoplastique du type de ceux mis en oeuvre pour la fabrication des vitrages feuilletés. Il s'agit notamment de feuilles de polyvinylbutyral (PVB) de chorure de polyvinyl (PVC) ou d'ethylène vinyl acétate (EVA) ou de composés analogues. Ces produits ont la propriété de fortement adhérer aux feuilles de verre ou de métal et de présenter une transparence aux rayons des longueurs d'onde du visible.

L'assemblage se fait suivant les techniques traditionnelles de feuilletage des feuilles de verre. Il s'agit notamment d'assemblage en étuve et sous pression éventuellement combiné avec une calandrage préalable.

Les feuilles intercalaires utilisées traditionnellement sont suffisamment thermoplastiques pour permettre l'incorporation des diodes dans l'épaisseur de la feuille par simple pression à chaud. Les diodes 3 préalablement fixées au circuit conducteur porté par la feuille de verre 5 sont habituellement de petites dimensions. Elles sont choisies de préférence aussi minces que possible. Les diodes ont par exemple typiquement une épaisseur de l'ordre, de ou inférieure à, 1mm. Leur épaisseur peut être aussi faible que 0,5 ou même 0,3mm. Les feuilles thermoplastiques utilisées sont avantageusement légèrement plus épaisses pour prévenir toute possibilité d'écrasement des diodes au cours de l'assemblage et les détériorations qui pourraient en résulter.

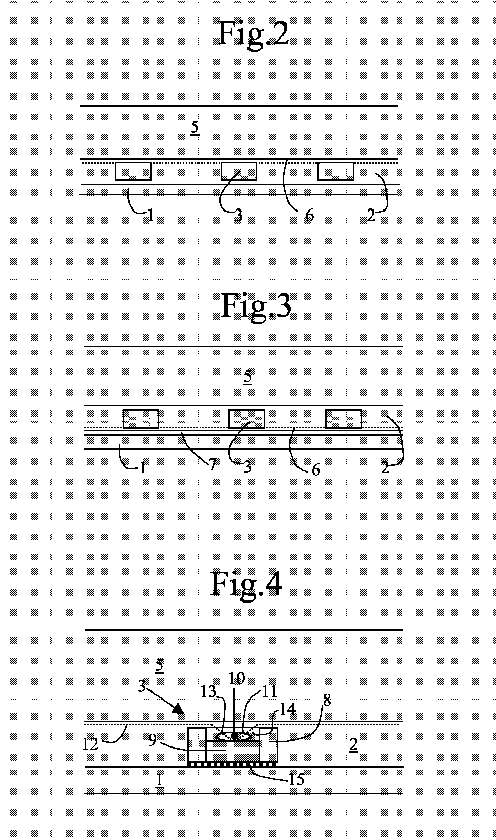

L'invention donne lieu à différents modes de réalisation, notamment en ce qui concerne les dispositions relatives des circuits d'alimentation dans la structure, la disposition des diodes, la composition de celles-ci etc. Les figures 1a et 1b présentent le cas du circuit d'alimentation disposé sur la feuille transparente 5. De façon schématique la coupe de la figure 2 reprend cette disposition.

Le circuit d'alimentation par la couche représentée en traits pointillés 6 alimente des diodes 3 disposées en série. Les diodes sont incorporées dans la feuille intercalaire 2 dont l'épaisseur est légèrement supérieure à celle des diodes de telle sorte que ces dernières ne sont pas en contact direct avec la feuille de matériau bon conducteur 1, mais en sont très proches. L'épaisseur résiduelle de matériau de la couche 2 comprise entre les diodes et la feuille 1 est très faible favorisant au mieux la conduction au travers de ce matériau qui par hypothèse n'est pas spécialement bon conducteur thermique.

Le maintien d'une fraction d'épaisseur de la feuille intercalaire évite de comprimer accidentellement les diodes entre les deux feuilles rigides 5 et 1.

La figure 3 présente en coupe une variante de la structure de la figure 2 dans laquelle la couche conductrice 6 formant le circuit d'alimentation des diodes, est disposée sur la feuille conductrice 1. Pour isoler la couche 6 de la feuille 1, un film isolant 7 est interposé entre le circuit 6 et la feuille 1.

Dans les dispositions envisagées aux figures 2 et 3 les diodes sont soit de type inversé("reverse"), c'est à dire que l'enveloppe de la diode est formée de manière que l'élément générateur du flux lumineux fait face au support de la diode constitué par la feuille transparente 5. Le flux est donc bien orienté vers la feuille transparente portant le circuit conducteur et les diodes elles-mêmes. A l'inverse, dans la structure de la figure 3, l'élément générateur du flux est du côté opposé au substrat sur lequel repose la diode, substrat constitué par la feuille de matériau conducteur de la chaleur 1.

La figure 4 illustre un mode de mise en oeuvre de diodes comprenant un "puits de chaleur". La diode 3 est ici de type "reverse". Elle est fixée sur la feuille de verre 5. (Pour la compréhension de la position des divers éléments, à la figure 4 la diode n'est pas représentée "sur" la feuille de verre, elle est néanmoins fixée directement sur celle-ci ou plus exactement sur la couche conductrice 12 qui est elle-même appliquée sur la feuille 5. Des conducteurs électriques de très petit diamètre 13, relient le circuit conducteur de la couche 12 à l'élément semi-conducteur 10, élément qui constitue la diode proprement dite.

L'élément 10 est avantageusement environné d'un élément réflecteur 11 qui oriente le flux lumineux vers la feuille transparente 5. Ce type de construction évite une perte de puissance lumineuse, et réduit la quantité de chaleur correspondant à l'absorption de ce flux lumineux par les éléments avoisinants. En effet les diodes irradient dans toutes les directions. Il convient donc de rediriger le flux suivant un faisceau qui permette l'extraction la plus large de celui-ci.

Le réflecteur et l'élément semi-conducteur sont pris dans un matériau de protection 14 qui le plus souvent est constitué d'une résine époxy, mais peut être de toute autre nature sous réserve d'être à la fois isolant électriquement et aussi transparent que possible. Ces matériaux sont choisis le cas échéant pour présenter une certaine conduction thermique, comme certaines résines époxy. Mais ces matériaux ne présentent généralement pas une conduction thermique suffisante pour assurer une évacuation efficace de la chaleur qui seule peut prévenir un échauffement excessif des éléments les plus sensibles comme les jonctions du "die" (le semi-conducteur) avec les conducteurs d'alimentation. La difficulté pour cette évacuation vient en particulier de la concentration du dégagement de chaleur sur un espace extrêmement réduit.

Pour assurer une évacuation suffisante de la chaleur produite les fabricants de diodes utilisent souvent des structures comportant ce qui est nommé "puits de chaleur". Ceux-ci sont constitués d'éléments de type métallique disposés au plus près de l'élément semi-conducteur 10 dans la structure de la diode.

A la figure 4 on a représenté une diode et son puits de chaleur 9, le tout pris dans l'enveloppe 8. L'enveloppe 8 est ordinairement de matériau isolant électrique qui n'est pas très bon conducteur de la chaleur. La présence de l'élément 9 constitue alors le point d'évacuation privilégié de la chaleur.

Dans les constructions selon l'invention il est avantageux de faire en sorte lorsque des diodes à puits de chaleur sont utilisées, de rapprocher le plus possible l'élément 9 de la feuille bonne conductrice de la chaleur 1. Si la construction le permet, il est même avantageux de faire en sorte que les deux soient au contact l'un de l'autre.

Le contact du puits de chaleur 9 avec la feuille 1 est néanmoins difficile à garantir de manière satisfaisante au cours de l'assemblage s'agissant des deux éléments rigides dont la position est relative et sujette à des variations. Pour améliorer la conduction il est alors avantageux de disposer entre les puits 9 et la plaque 1 un matériau de jonction malléable 14, bon conducteur thermique qui épouse de façon appropriée les surfaces qui se font face quelle que soit leur position ou leurs irrégularités intrinsèques. Ce matériau 14 peut recouvrir l'élément 9 avant l'assemblage et se trouver plaqué sur la feuille 1 comme représenté à la figure 4. Il est possible aussi d'en revêtir la feuille 1, également avant l'assemblage.

Dans les exemples précédents, la structure envisagée est celle d'un feuilleté comportant systématiquement une feuille thermoplastique 2 associant les feuilles transparente 5 et conductrice de la chaleur 1. Cette feuille intercalaire peut être remplacée par une lame d'air les deux feuilles 1 et 5 étant alors maintenues à distance l'une de l'autre par des éléments espaceurs non représentés sur les figures. Ces éléments sont distribués sur le pourtour de l'ensemble et/ou sur la surface des feuilles 1 et 5 de manière à maintenir les feuilles à distance même si celles-ci sont soumises à une pression extérieure.

Les modes de réalisation de l'invention sont susceptibles d'inclure des éléments supplémentaires qui ajoutent ou complètent les propriétés mise en oeuvre de manière générale. Il est possible par exemple de disposer sur la feuille conductrice de la chaleur 1, une surface réfléchissant la lumière pour améliorer encore le rendement lumineux des moyens d'éclairage constitués. L'utilisation de feuilles métalliques facilite cette disposition. Dans ce cas la face de la feuille métallique présente par exempleun poli adéquat.

La mise en oeuvre de multiples diodes sur un même moyen d'éclairage conduit à la présence d'autant de points lumineux contrastant fortement avec le fond de ces produits. Il est possible de réduire ce contraste en utilisant comme feuille transparente une feuille qui favorise une certaine diffusion de la lumière, notamment une feuille de verre dépolie par exemple de type maté ou une feuille de verre de type opalin.

La feuille de verre peut bien entendu être colorée ou décorée de motifs. De même la disposition des diodes qui sur les figures représente une distribution régulière peut au contraire conduire à des motifs décoratifs géométriques, aléatoires ou selon des dessins particuliers.

Le nombre des diodes par unité de surface des moyens d'éclairage est variable dans de larges mesures. Dans le cas où il est préféré de regrouper les diodes de façon relativement dense, la limite au nombre de cette densité de diode vient d'abord des difficultés occasionnées par l'incorporation de ces diodes dans les feuilles intercalaires thermoplastiques dans les ensembles feuilletés. La densité des diodes n'entraîne habituellement pas de "surchauffe" générale des moyens d'éclairage. En effet l'élévation de température comme indiqué précédemment est circonscrite à l'espace immédiatement au contact du "die". L'élévation de température s'estompe très rapidement dès que l'on s'éloigne de cette source en raison notamment du caractère mauvais conducteur de l'environnement de celle-ci. Les dispositions de l'invention visent donc à faire en sorte que ce soit cet environnement immédiat dont la température soit maîtrisée par l'utilisation de ces éléments conducteurs de la chaleur. Le rapprochement des sources de chaleur constituées par chacune des diodes n'intervient que de façon secondaire dans la mesure ou la feuille conductrice de la chaleur assure elle-même convenablement l'élimination de la chaleur qu'elle évacue des diodes.

Pour cette raison il est possible de constituer des moyens d'éclairage offrant un flux lumineux par unité de surface relativement important.

Les épaisseurs respectives des feuilles transparente 5 et conductrice de la chaleur 1, sont fonction principalement des dimensions des moyens d'éclairage. Ceux-ci en dehors de leurs propriétés lumineuses doivent offrir une certaine résistance mécanique dictée par leur mode d'utilisation.

Pour les feuilles conductrices de la chaleur 1, elles sont de préférence d'épaisseur limitée pour permettre l'élimination la plus efficace possible de la chaleur qu'elles véhiculent à partir de leur face opposée à celle voisine des diodes. Cette évacuation peut être facilitée également par une ventilation de cette face. Dans la pratique des feuilles de quelques dixièmes de millimètres sont préférées ce qui limite aussi le poids des moyens d'éclairage.

Les feuilles de verre minéral ou organique qui dans tous les cas conduisent mal la chaleur sont choisies d'épaisseur suffisante pour protéger l'ensemble dans l'environnement de leur utilisation. Leur épaisseur est de préférence limitée à 8mm et de façon particulièrement préférée est comprise entre 2 et 6mm.

A titre d'exemple un plafonnier est préparé qui est constitué pour la circonstance d'une feuille de verre de 600x600mm et d'épaisseur 3mm. Cette feuille porte une couche d'oxyde d'étain dopé dont la résistance est de 15Ω/□. Cette couche est divisée tous les 50mm par une ligne qui assure l'isolation entre les différentes parties de la feuille. Le long de chacune des 10 lignes, 10 diodes sont distribuées à égale distance les unes des autres. Les 100 diodes sont ainsi distribuées sur toute la surface de la feuille à distance des bords de celle-ci.

Les diodes utilisées sont produites par la société Nichia et commercialisées sous la référence NFSW036B.

Après soudures des diodes sur la feuille de verre on forme un ensemble feuilleté au moyen d'une feuille intercalaire de PVB de 1,12mm d'épaisseur, et d'une feuille d'acier de 1mm de même dimension que la feuille de verre. L'assemblage est tel que la diode incorporée a une hauteur qui est de 80% de l'épaisseur de l'intercalaire.

Le luminaire est laissé dans un environnement d'air ambiant, sans ventilation ni refroidissement forcé.

L'alimentation électrique des diodes est réglée en intensité de sorte que la température de contact de la feuille de PVB avec chaque diode ne dépasse pas 80°C.

Pour l'assemblage réalisé selon l'invention la température de fonctionnement est atteinte pour une intensité de 125mA par diode. Compte tenu du rendement électrique et lumineux de l'ensemble, on atteint un flux lumineux de l'ordre de 420 lumens.

Un assemblage analogue dans lequel la feuille d'acier est remplacée par une deuxième feuille de verre d 3mm pour les mêmes limites d'échauffement des diodes ne permet qu'une intensité de 75mA par diode, nettement inférieure à celle obtenue selon l'invention.

## Revendications

1. Moyen d'éclairage comprenant un ensemble de diodes électroluminescentes disposées derrière une feuille transparente notamment en matériau verrier, un circuit d'alimentation des diodes et une feuille de matériau bon conducteur de la chaleur s'étendant en regard des diodes.

2. Moyen d'éclairage selon la revendication 1 dans lequel les diodes sont séparées de la feuille de matériau conducteur de la chaleur par un film isolant de très faible épaisseur.

3. Moyen d'éclairage selon l'une des revendications précédentes dans lequel la feuille transparente est maintenue à distance de la feuille conductrice de la chaleur, la distance étant un peu supérieure à celle des diodes.

4. Moyen d'éclairage selon la revendication 3 dans la quelle la feuille transparente est associée à la feuille de matériau bon conducteur de la chaleur en un ensemble feuilleté au moyen d'une feuille intercalaire d'un matériau thermoplastique essentiellement transparent dans lequel les diodes sont incorporées.

5. Moyen d'éclairage selon l'une des revendications précédentes dans lequel les diodes sont alimentées par un circuit électrique constitué dans une couche conductrice transparente appliquée sur la feuille de verre transparente.

6. Moyen d'éclairage selon la revendication 5 dans lequel les diodes sont de structure dite "reverse".

7. Moyen d'éclairage selon l'une des revendications 1 à 4 dans lequel Les diodes sont alimentées par un circuit électrique supporté par la feuille de matériau bon conducteur de la chaleur, avec interposition entre cette dernière et le circuit d'alimentation d'un mince film isolant électrique.

8. Moyen d'éclairage selon l'une des revendications précédentes dans lequel le matériau bon conducteur de la chaleur est une feuille métallique.

9. Moyen d'éclairage selon la revendication 8 dans lequel la feuille métallique est une feuille d'acier, une feuille de cuivre ou une feuille d'aluminium.

10. Moyen d'éclairage selon l'une des revendications précédentes dans lequel la face de la feuille de matériau bon conducteur de la chaleur tournée vers les diodes constitue un réflecteur de la lumière.

11. Moyen d'éclairage selon l'une des revendications précédentes dans lequel la feuille transparente est formée d'une feuille assurant une diffusion de la lumière.

12. Moyen d'éclairage selon l'une des revendications précédentes dans lequel les diodes comprennent des éléments formant "puits de chaleur".

13. Moyen d'éclairage selon la revendication 12 dans lequel le contact des éléments formant puits de chaleur avec la feuille bonne conductrice de la chaleur est amélioré par l'interposition d'un film d'une substance malléable elle-même bonne conductrice de la chaleur.
